(19) Europäisches Patentamt / European Patent Office / Office européen des brevets

(11) **EP 3 933 858 B1**

(12) **EUROPEAN PATENT SPECIFICATION**

(45) Date of publication and mention
of the grant of the patent:
**07.06.2023 Bulletin 2023/23**

(21) Application number: **20721664.9**

(22) Date of filing: **26.02.2020**

(51) International Patent Classification (IPC):
*H01B 3/56* *(2006.01)*    *H01H 33/22* *(2006.01)*
*H02B 13/055* *(2006.01)*    *H01H 33/56* *(2006.01)*

(52) Cooperative Patent Classification (CPC):
**H01B 3/56; H01H 33/22;** H01H 2033/566

(86) International application number:
**PCT/ES2020/070137**

(87) International publication number:
**WO 2020/174114 (03.09.2020 Gazette 2020/36)**

(54) **LOW ENVIRONMENTAL IMPACT ELECTRICAL INSULATION SYSTEM FOR MEDIUM- AND HIGH-VOLTAGE ELECTRICAL SWITCHGEAR**

ELEKTRISCHES ISOLATIONSSYSTEM MIT GERINGEM EINFLUSS AUF DIE UMWELT FÜR EINE ELEKTRISCHE SCHALTANLAGE FÜR MITTLERE UND HOHE SPANNUNGEN

SYSTÈME D'ISOLEMENT ÉLECTRIQUE À FAIBLE IMPACT ENVIRONNEMENTAL POUR APPAREIL ÉLECTRIQUE À MOYENNE ET HAUTE TENSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2019 ES 201930177**

(43) Date of publication of application:
**05.01.2022 Bulletin 2022/01**

(73) Proprietor: **Ormazabal Corporate Technology, A.I.E.**
**48340 Amorebieta-Etxano (Vizcaya) (ES)**

(72) Inventors:
• **IZCARA ZURRO, Jesús**
**48340 AMOREBIETA-ETXANO (Vizcaya) (ES)**
• **LARRIETA ZUBIA, Javier**
**48340 AMOREBIETA-ETXANO (Vizcaya) (ES)**

(74) Representative: **Herrero & Asociados, S.L.**
**Cedaceros, 1**
**28014 Madrid (ES)**

(56) References cited:
**EP-A1- 3 249 656**    **WO-A1-2014/173776**
**WO-A1-2016/113292**    **WO-A1-2016/116637**
**WO-A1-2017/162578**    **US-A1- 2018 247 779**

**Description**

**FIELD OF THE INVENTION**

The present invention belongs to the field of electrical insulation systems for use in medium- and high-voltage electrical switchgear. More particularly, the invention relates to an electrical insulation system comprising two fundamental elements:

>    a) a gaseous medium formed by a mixture of i) one or more non-flammable hydrofluoroolefins with at least 4 carbon atoms and ii) one or more carrier gases selected from N2, O2, dry air, helium, $CO_2$ or mixtures thereof; and
>    b) a drying agent wherein the drying agent is a molecular sieve with a pore size of 3 to 6 Å and a polar surface. The hydrofluoroolefins with at least 4 carbon atoms are cis-1,1,1,4,4,4-hexafluoro-2-butene (HFO-1336mzzZ), trans-1,1,1,4,4,4-hexafluoro-2-butene (HFO-1336mzzE) or a combination of both.

Similarly, the invention relates to the use of the electrical insulation system and to the medium- or high-voltage electrical switchgear comprising a closed area inside of which there are live electrical components and an electrical insulation system according to the invention.

**BACKGROUND OF THE INVENTION**

Electrical insulation in medium- and high-voltage devices is normally ensured by means of using a dielectric gas which is introduced into a closed and hermetic container where the voltage components of the electrical devices are found.

The dielectric gas most widely used in recent years is SF6 gas due to its excellent dielectric properties and, among many other advantages, due to it not being toxic to humans. However, this gas presents a significant environmental impact due to its high global warming potential (GWP = 22,800).

Therefore, in recent years, alternative gases are being sought which may replace this gas in these types of devices. Different alternative gases to SF6 with good dielectric properties have been considered, but for one reason or another (unacceptable toxicity, high global warming potential, flammability, etc.) they have not been ultimately implemented.

Similarly, the use as a dielectric medium in these devices of solely more environmentally-friendly gases such as dry air, N2, O2 or CO2 would involve a considerable increase of the size of these devices for a given voltage level, due to the lower dielectric strength of these gases compared to SF6. Another option in this case would be to increase the filling pressure of the devices to values greater than those used with SF6 (around 1300 mbars), but this would involve adapting the design to comply with the different existing national regulations for containers with pressures greater than 1500 mbars, with the consequent increase in the cost of the device.

One alternative is the use of fluoroketones not only because they have good dielectric strength, but also because some of them are not toxic to humans and have a much lower environmental impact than SF6 gas. In fact, the documents WO 2010/1460022 and WO 2010/142346 already describe the use of fluoroketones for electrical insulation in medium- and high-voltage devices.

Other documents such as WO 2012/160158 and WO 2012/160155 describe mixtures of fluoroketones with carrier gases such as CO2, N2, O2 or air or mixtures thereof.

Another problem negatively affecting the dielectric capacity of the gaseous insulation systems is the presence of water molecules coming from the materials with which some electrical components of the switchgear are manufactured. Water may appear in the closed and watertight area of the switchgear where the insulating gas is found because some thermoplastic materials used in the manufacture of electrical components such as, for example, polyamides can contain water therein. For example, in the case of polyamides, they can have absorbed between 4.5 and 7.5% by weight in water.

The presence of water in the gaseous medium causes the dielectric properties thereof to reduce, therefore its presence should be avoided. In order to resolve the problem of water present inside the electrical switchgear, drying agents and also molecular sieves have been used. A molecular sieve is a material containing small pores of an exact, uniform size and which is used as the adsorbent agent for gases and liquids. The molecules which are sufficiently small so as to pass through the pores are adsorbed, while the larger molecules are not. Unlike a filter, the process operates at a molecular level. For example, a water molecule may be sufficiently small to pass, while other larger molecules cannot do so.

In insulation systems with SF6 gas as the only insulating gas, the separation of the water is relatively simple by means of molecular sieves since the size of the SF6 molecule is substantially greater than that of the water molecule and therefore the selection by molecule sizes does not represent a significant problem.

However, this problem is not so easy to resolve in gaseous insulation systems in which there are molecules of sizes comparable to those of the water molecule such as, for example, carrier gases such as $N_2$, $CO_2$, dry air together with insulators such as fluoroketones. In these types of dielectric insulators, the gases that act like carriers ($CO_2$, $N_2$, air, $O_2$, etc.) have molecular sizes similar to those of the water molecule and the sieves can adsorb part of these gases instead of the water molecules.

In document WO 2016/116637, the authors of the present invention resolve this problem by means of a gaseous medium formed by one or more fluoroketones, another additional dielectric gas, particularly fluoronitrile, and by one or more carrier gases and a molecular sieve with certain characteristics.

There is still a need to develop insulation systems for medium- and high-voltage electrical switchgear based on gases or gas mixtures which allow, in addition to exercising their main electrical insulation function, improved characteristics to be provided in terms of safety, environmental impact or durability which increase the versatility of the existing insulation systems and allow the adaptability of the insulation systems to be increased to the greatest number of working conditions possible to which the systems or medium- and high-voltage switchgear can be subjected.

Another alternative is the systems based on mixtures of fluoroketones and hydrofluoroolefins, both gases with a high dielectric strength, in combination with carrier gases such as $N_2$, $CO_2$ or dry air. The document WO 2013/041695 describes electrical insulation gaseous media based on mixtures composed of a hydrofluoroolefin with 3 carbon atoms, such as for example HFO-1234ze or HFO-1234yf and a fluoroketone with 5 carbon atoms, with carrier gases such as for example $N_2$. The document WO 2013/004796 describes electrical insulation gaseous media based on mixtures composed of a hydrofluoroolefin with 3 carbon atoms, such as for example HFO-1234ze or HFO-1234yf, with carrier gases such as for example $N_2$. There are also alternatives based on fluoroolefins such as octaflurorobutene as described in WO 2017/162578 as well as alternatives based on hexafluorobutene as in US2018/0247779.

Hydrofluoroolefins with 3 carbon atoms HFO-1234ze or HFO-1234yf, however, have the problem that they can be flammable under certain operating concentrations and temperatures of the medium- and high-voltage electrical switchgear for which the insulation systems described herein are intended.

In addition, there is another problem associated with the use of fluoroketones in these electrical insulation systems. When the fluoroketones are used in combination with molecular sieves with the aim of minimising the quantity of residual water in the gaseous medium, there is a certain risk that part of the water adsorbed in the molecular sieve does not migrate to the interior of the material of the molecular sieve and remains adsorbed on its exterior surface, as is indicated in the document WO 2016/113292. This water adsorbed in the exterior surface of the molecular sieve may react with the fluoroketones and cause a cascade reaction and, as a result of this, cause the degradation of part of the fluoroketone, the appearance of undesired decomposition products and a reduction of the insulating properties or arc extinction of the initial gaseous medium.

The authors of the present invention have developed an electrical insulation system for medium- and high-voltage switchgear based on a mixture free of fluoroketones and composed of one or more non-flammable hydrofluoroolefins with at least 4 carbon atoms selected from cis-1,1,1,4,4,4-hexafluoro-2-butene (HFO-1336mzzZ), trans-1,1,1,4,4,4-hexafluoro-2-butene (HFO-1336mzzE) or a combination of both and one or more carrier gases (such as $N_2$, $O_2$, $CO_2$, helium or dry air) and at least a drying agent wherein the drying agent is a molecular sieve with a pore size of 3 to 6 Å and a polar surface.

The electrical insulation system for medium- and high-voltage switchgear of the present invention improves the dielectric strength of the systems previously described and also allows the dielectric insulation capacity to not be affected by the presence of water which can appear inside the closed container of said electrical switchgear, where the electrical components insulated with dielectric gases are found. In addition, the system of the present invention has excellent environmental characteristics, high safety (due to it not being flammable) and very low toxicity.

## OBJECT OF THE INVENTION

Therefore, an object of the invention is an electrical insulation system with low environmental impact for medium- or high-voltage electrical switchgear which represents a solution to the problems set out above. More particularly, the main object of the present invention is an electrical insulation system for medium- or high-voltage electrical switchgear, comprising:

   a) a gaseous medium formed by a mixture of:

      i. one or more non-flammable hydrofluoroolefins with at least 4 carbon atoms; and
      ii. one or more carrier gases selected from N2, O2, dry air, helium, $CO_2$ or mixtures thereof;

   b) a drying agent wherein the drying agent is a molecular sieve with a pore size of 3 to 6 Å and a polar surface,

wherein the hydrofluoroolefins with at least 4 carbon atoms are cis-1,1,1,4,4,4-hexafluoro-2-butene (HFO-1336mzzZ), trans-1,1,1,4,4,4-hexafluoro-2-butene (HFO-1336mzzE) or a combination of both.

Another object of the invention is the use of the electrical insulation system of the invention for electrical insulation and/or for electrical arc extinction in medium- or high-voltage electrical switchgear.

An additional object of the invention is a method for the electrical insulation and/or the electrical arc extinction in medium- and high-voltage electrical switchgear comprising the introduction of the electrical insulation system in a closed and hermetic container where live electrical components of said medium- or high-voltage electrical switchgear are located.

A final object of the present invention is a medium- or high-voltage electrical switchgear comprising a closed container inside of which there are live electrical components and an electrical insulation system according to the present invention.

## BRIEF DESCRIPTION OF THE FIGURES

**Figure 1:** representation of the structure of the zeolite A.
**Figure 2:** representation of the location of the sodium cations in the structure A of the zeolite.
**Figure 3:** BAUR DTA-100E device which serves to determine the dielectric strength of electrical insulation gaseous systems.

## DETAILED DESCRIPTION OF THE INVENTION

A first object of the invention relates to an electrical insulation system for medium- or high-voltage electrical switchgear, comprising:

a) a gaseous medium formed by a mixture of:

i. one or more non-flammable hydrofluoroolefins with at least 4 carbon atoms; and
ii. one or more carrier gases selected from N2, O2, dry air, helium, $CO_2$ or mixtures thereof;

b) a drying agent wherein the drying agent is a molecular sieve with a pore size of 3 to 6 Å and a polar surface,

wherein the hydrofluoroolefins with at least 4 carbon atoms are cis-1,1,1,4,4,4-hexafluoro-2-butene (HFO-1336mzzZ), trans-1,1,1,4,4,4-hexafluoro-2-butene (HFO-1336mzzE) or a combination of both.

The first element of the electrical insulation system of the invention is the gaseous medium.

The essential element of the gaseous medium would be the hydrofluoroolefins with at least 4 carbon atoms.

Trans-1,1,1,4,4,4-hexafluoro-2-butene (HFO-1336mzzE) and cis-1,1,1,4,4,4-hexafluoro-2-butene (HFO-1336mzzZ)are characterised by having a very low global warming potential, specifically HFO-1336mzzZ has a GWP of 2 and HFO-1336mzzE has a GWP of 18, and their toxicity levels are sufficiently low so as to be applied safely in medium- and high-voltage electrical devices. For example, the occupational exposure limit, OEL (8 hours) for hydrofluoroolefin HFO-1336mzzZ is 500 ppmv and for hydrofluoroolefin HFO-1336mzzE is 400 ppmv.

But also, an especially relevant advantage of hydrofluoroolefins with at least 4 carbon atoms and, particularly, both the hydrofluoroolefin HFO-1336mzzZ and HFO-1336mzzE, is that they are not flammable, that is to say, they do not present flammability limits at the normal operating temperatures of the medium- and high-voltage electrical devices. Unlike the hydrofluoroolefins with 3 carbon atoms which do present flammability limits at said temperatures. Thus, for example, the hydrofluoroolefin with 3 carbon atoms HFO-1234yf presents at 21 °C a lower flammability limit of 6.2% (% by volume in air) and an upper flammability limit of 12.3% (% by volume in air) s/ASTM E681-01. The hydrofluoroolefin with 3 carbon atoms HFO-1234zeE does not present any flammability limits at 21 °C, but does above 30 °C, such that for example at 60 °C the lower flammability limit is 5.7% (% by volume in air) and the upper flammability limit is 11.3% (% by volume in air) s/ASTM E681-01. This means that the systems based on mixtures with hydrofluoroolefins with 3 carbon atoms, such as the one mentioned above, are not safe under determined work conditions. For example, using the data above it can be deduced that a mixture formed by 8 % HFO-1234zeE in dry air would be flammable at 60 °C, while the mixture with 8 % HFO-1336mzzE in dry air would not be flammable at 60 °C.

Therefore, the use of hydrofluoroolefins with at least 4 carbon atoms allows the system of the present invention to have a greater degree of safety than those described in WO 2013/004796.

In spite of this, in one particular embodiment of the invention, the gaseous mixture of the system of the invention can comprise one or more hydrofluoroolefins with 3 carbon atoms in percentages outside of their flammability range. The introduction of these hydrofluoroolefins with 3 carbon atoms in percentages outside of their flammability range does not affect the safety of the mixture but it has been observed that it does allow the dielectric strength to increase. Preferably, the hydrofluoroolefin with 3 carbon atoms that can be added to the gaseous mixture of the invention is trans-1,3,3,3-tetrafluoropropene (HFO-1234zeE).

The last element of the gaseous mixture of the electrical insulation system of the invention is the carrier gas(es). Carrier gases are known as those gases used to dilute the hydrofluoroolefin(s) and which, despite having a lower dielectric strength, allow the gaseous medium to behave as such at low temperatures. Therefore, they are usually completely innocuous (non-toxic) gases and generally have a reduced environmental impact. The carrier gases can be varied such as $N_2$, $O_2$, dry air, helium, $CO_2$ or mixtures thereof. Particularly and preferably, the carrier gases are selected in the system of the present invention from among $N_2$, $O_2$, dry air or mixtures thereof.

One particular and preferred embodiment of the invention relates to an electrical insulation system where the gaseous mixture comprises one or more non-flammable hydrofluoroolefins with at least 4 carbon atoms and one or more carrier gases. In this embodiment, the carrier gases are preferably selected from among N2, O2, dry air or mixtures thereof.

The total dielectric strength of the gaseous mixture will be influenced by the quantity of hydrofluoroolefin or hydrofluoroolefins with at least 4 carbon atoms (and optionally of hydrofluoroolefin with 3 carbon atoms), such that the more hydrofluoroolefin or hydrofluoroolefins there are in the gaseous mixture, the greater its dielectric strength will be.

However, the quantity of hydrofluoroolefin with at least 4 carbon atoms in the gaseous mixture is conditioned by the minimum operating temperature of the switchgear where it is going to be used. Generally, the lower the minimum operating temperature of the electrical switchgear, the lower the quantity of hydrofluoroolefins with at least 4 carbon atoms can be put in the gaseous mixture since it is desirable to avoid its partial condensation at low temperatures.

The other fundamental element of the electrical insulation system of the invention, aside from the gaseous medium, is the drying agent.

The drying agent is an adsorbent agent. Adsorption, is caused when a substance, in this case water, is kept within another substance due to the relatively weak intermolecular physical bonds (for example, Van der Waals forces, electrostatic interactions). In the present invention, the drying agent is a molecular sieve.

The use of drying agent in the electrical insulation system of the invention is justified by the need to retain the water molecules present in the materials of some components forming the electrical switchgear, since the presence of said molecules negatively affects the dielectric strength and therefore the capacity as an insulator of the gaseous mixture with hydrofluoroolefins.

The drying agent is a molecular sieve with a pore size of 3 to 6 Å (preferably 3 to 4 Å) and a polar surface. A molecular sieve, as already mentioned above, is a material containing small pores of an exact, uniform size which is used as the adsorbent for gases and liquids. Molecular sieves are capable of discriminating at a molecular level such that the molecules which are sufficiently small so as to pass through the pores are adsorbed, while the larger molecules are not.

Molecular sieves also have a high capacity of water adsorption which, in some cases, can be up to 22 % of its own weight in water. However, due to the fact that the molecules of the carrier gases (N2, O2, dry air or helium) of the gaseous mixture of the insulation system have a molecular size similar to that of the water molecule, it is necessary for the molecular sieve to have capacity to selectively separate the water molecules from those of these gases. The use of a molecular sieve with a pore size of 3 to 6 Å (preferably of 3 to 4 Å) and a polar surface allows it to make this discrimination and selectively adsorb the water molecules with respect to the molecules of $N_2$, $O_2$, dry air, $CO_2$ or helium, meaning that the dielectric strength of the electrical insulation system of the invention is not altered or deteriorated.

This selective capacity towards the water of the molecular sieves comes not only from the size of the pore, but also and especially for the case of molecules with a similar size to that of water, from the polar surface of the molecular sieves. The fact that the surface is polar means that it attracts, with greater intensity, those more polar molecules with a preference over the less polar ones.

Table 1 describes both the size and the polarity of determined molecules:

**Table 1.**

| Product | Size of the molecule, Angstroms | polarity |
|---|---|---|
| Helium | 2.55 | 10.2 |
| Air | 3.71 | 78.6 |
| Carbon dioxide ($CO_2$) | 3.94 | 195.2 |
| Water ($H_2O$) | 2.64 | 809.1 |
| Nitrogen ($N_2$) | 3.79 | 71.4 |
| Oxygen ($O_2$) | 3.46 | 106.7 |

(continued)

| Product | Size of the molecule, Angstroms | polarity |
|---|---|---|
| Sulfur hexafluoride (SF$_6$) | 5.12 | 222.1 |
| Fluoroketone (CF$_3$)$_2$-CF-CO-CF$_3$ | approx. 9.00 | |
| Hydrofluoroolefin HFO-1336mzzZ | approx. >6.50 | |

On the basis of this data, it is easy to understand that, for example, it will be easy to discriminate by size the adsorption of the water molecules with respect to molecules of, for example, SF6, fluoroketone or hydrofluoroolefin. However, it is not so easy with respect to molecules of the carrier gases such as helium, O$_2$, N$_2$, CO$_2$ or air whose sizes are similar. With respect to these molecules, the polarity of the water is much more relevant than that of the other carrier gases. This characteristic of the water molecules is the one which causes them to be adsorbed in a preferred manner with respect to the rest when the surface of the sieve is polar.

There are molecular sieves of different natures such as zeolites which are aluminosilicates, porous glass, clays, microporous carbons, activated carbons, etc. At the beginning, any molecular sieve is appropriate for use in the electrical insulation system of the invention provided the pore size is between 3 to 6 Å, preferably between 3 to 4 Å, and has a polar surface.

In one particular embodiment, the molecular sieve is a zeolite sieve. The zeolite can be natural and preferably synthetic zeolite. The zeolites are aluminosilicates which can present different structures such as zeolite A, zeolite X, zeolite Y, etc.

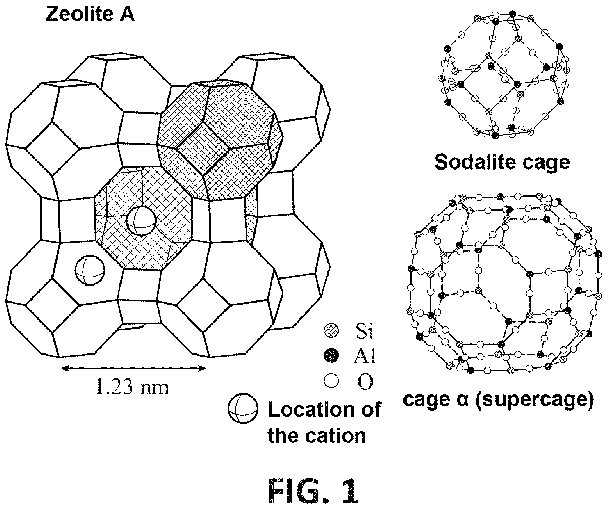

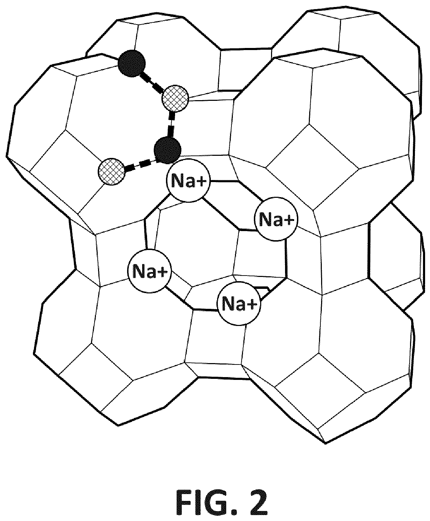

The preferred zeolite has structure A. In Figure 1, the structure of the zeolite A can be observed. The aluminium, silicone and oxygen atoms are joined to form truncated octahedrons called sodalite cages. The sodalite cages are combined into zeolite A in the form of a simple cube, leaving an inner space called cage $\alpha$ with a cavity of 11.5 Å in diameter accessible from the openings of the six sides of the cube. These inlets are surrounded by 8 oxygen atoms and one or more exchangeable cations partially block the frontal area. When the cations are sodium (Na+) (see Figure 2), the oxygen atom ring provides a "window" of 4.2 Å in diameter to enter inside the structure (cage $\alpha$). The sodium cations can be partially substituted for other cations in synthetic zeolites such as for example potassium (K+)) or calcium (Ca2+), causing openings of 3 Å and 5 Å respectively.

In addition to helping to determine the opening diameter of the pores, which, without doubt, is relevant to the molecular discrimination of the gases adsorbed by the zeolites, they help there to be rigidly established positive and negative charges in the crystalline structure of the zeolite which result in an unequal distribution of the charges which causes the surface to be polar. This characteristic of the zeolite is precisely that which allows water molecules to be preferably adsorbed with respect to other molecules of carrier gases such as N$_2$, O$_2$, dry air or helium.

Another additional object of the invention is represented by the use of an electrical insulation system, like the one described above for electrical insulation and/or for electrical arc extinction in medium- or high-voltage electrical switchgear.

The gaseous medium comprising a mixture of one or more non-flammable hydrofluoroolefins with at least 4 carbon atoms and one or more carrier gases (and optionally also one or more hydrofluoroolefins with 3 carbon atoms used in percentages thereof outside of their flammability limits) provides a dielectric strength to the system which the drying agent is responsible for maintaining, due to its capability to adsorb the water molecules which may appear in the gaseous medium coming from some of the elements of the medium- and high-voltage electrical switchgear which are found in the closed and hermetic container of said switchgear. It is for this reason that the system of the invention is very useful in electrical insulation and is capable of extinguishing electrical arcs in this type of electrical switchgear.

Another additional object of the invention in some way related to the use of the electrical insulation system of the invention relates to a method for the electrical insulation and/or electrical arc extinction in high- and medium-voltage electrical switchgear which comprises the introduction of an electrical insulation system, comprising:

a) a gaseous medium formed by a mixture of:

i. one or more non-flammable hydrofluoroolefins with at least 4 carbon atoms; and
ii. one or more carrier gases selected from N2, O2, dry air, helium, CO$_2$ or mixtures thereof;

b) a drying agent, wherein the drying agent is a molecular sieve with a pore size of 3 to 6 Å and a polar surface, and wherein the hydrofluoroolefins with at least 4 carbon atoms are cis-1,1,1,4,4,4-hexafluoro-2-butene (HFO-1336mzzZ), trans-1,1,1,4,4,4-hexafluoro-2-butene (HFO-1336mzzE) or a combination of both.

In a closed and hermetic container where the elements to be insulated of said medium- or high-voltage electrical switchgear are located.

In one particular embodiment of the method previously described, the gaseous mixture can comprise one or more hydrofluoroolefins with 3 carbon atoms in percentages outside of their flammability range.

In order to carry out the method, one or more pouches permeable to the gases and containing the drying agent(s) are initially placed inside the container. Then, the container is closed such that it is perfectly hermetic and it is vacuumed. Subsequently, the gaseous mixture with the non-flammable hydrofluoroolefin(s) with at least 4 carbon atoms (and optionally one or more hydrofluoroolefins with 3 carbon atoms, using percentages thereof outside of their flammability limits) and the carrier gas(es) are introduced until the desired pressure is reached.

A final object of the invention relates to a medium- or high-voltage electrical switchgear comprising a closed container inside of which there are live electrical components and an electrical insulation system comprising:

a) a gaseous medium formed by a mixture of:

i. one or more non-flammable hydrofluoroolefins with at least 4 carbon atoms (and optionally one or more hydrofluoroolefins with 3 carbon atoms, in percentages outside of their flammability limits); and
ii. one or more carrier gases selected from $N_2$, $O_2$, dry air, helium, $CO_2$ or mixtures thereof;

b) a drying agents wherein the drying agent is a molecular sieve with a pore size of 3 to 6 Å and a polar surface, and wherein the hydrofluoroolefins with at least 4 carbon atoms are cis-1,1,1,4,4,4-hexafluoro-2-butene (HFO-1336mzzZ), trans-1,1,1,4,4,4-hexafluoro-2-butene (HFO-1336mzzE) or a combination of both.

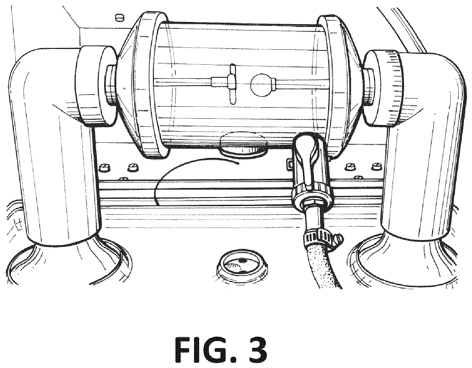

Figure 3 is a testing system to experimentally determine the dielectric strength of gaseous insulation systems.

In one particular embodiment of the invention, said switchgear can be a secondary distribution cubicle for electrical distribution networks of up to 72 kV.

Below are examples which allow the possible embodiments of the invention to be understood:

**Example 1: detailed explanation of the embodiments of the invention**

As a preferred embodiment of this invention, an electrical insulation system is proposed inside a closed and hermetic container forming part of a medium- or high-voltage electrical switchgear comprising one or more drying agents, preferably calcium oxide, a zeolitic molecular sieve with a size of between 3 to 6 Å, preferably between 3 Å and 4 Å or a mixture of both and additionally a gaseous mixture comprising:

a) at least one non-flammable hydrofluoroolefin with four carbon atoms, such as for example HFO-1336mzzE or HFO-1336mzzZ
b) and in addition, another carrier gas or gases such as for example $N_2$, dry air, $O_2$, $CO_2$, or helium or any combination thereof.

The presence in the gaseous mixture of one or more non-flammable hydrofluoroolefins with at least 4 carbon atoms such as HFO-1336mzzE or HFO-1336mzzZ allows the dielectric strength of the mixture to be substantially increased without negatively affecting other operative parameters.

The dielectric strength of the insulation system, in addition to being improved by the presence of one or more drying agents due to the reduction of water therein, will also be influenced by the percentage of hydrofluoroolefin or hydrofluoroolefins with at least 4 carbon atoms used in the gaseous mixture. In such a way that the more hydrofluoroolefin with at least 4 carbon atoms there is in the gaseous mixture, the greater its dielectric strength will be for a determined final filling pressure. However, as previously mentioned, the quantity of hydrofluoroolefin with at least 4 carbon atoms in the gaseous mixture is conditioned by the minimum operating temperature of the switchgear if its condensation at low temperatures is to be avoided (which would involve a reduction of the dielectric properties of the gaseous mixture at these low temperatures).

In the following tables, the molar fraction values of the hydrofluoroolefins HFO-1336mzzZ and HFO-1336mzzE are shown which could be used in the gaseous mixture without producing condensation thereof for different minimum operating temperatures of the switchgear, assuming a filling temperature of the switchgear of 20 °C and with a total filling pressure of the mixture of 1400 mbars.

**Table 2. Mixtures with HFO-1336mzzZ**

| Temp. (°C) | Pvs, HFOZ (bar) | P, HFOZ (bar) | X, HFOZ |
|---|---|---|---|
| -40 | 0.023 | 0.029 | 0.0211 |
| -35 | 0.033 | 0.041 | 0.0292 |
| -30 | 0.046 | 0.056 | 0.0398 |
| -25 | 0.063 | 0.075 | 0.0534 |
| -20 | 0.085 | 0.099 | 0.0706 |
| -15 | 0.114 | 0.129 | 0.0921 |
| -10 | 0.149 | 0.166 | 0.1186 |
| -5 | 0.193 | 0.211 | 0.1508 |
| 0 | 0.247 | 0.266 | 0.1897 |

**Table 3. Mixtures with HFO-1336mzzE**

| Temp. (°C) | Pvs, HFOE (bar) | P, HFOE (bar) | X, HFOE |
|---|---|---|---|
| -30 | 0.162 | 0.195 | 0.1395 |
| -20 | 0.290 | 0.336 | 0.2399 |
| -10 | 0.490 | 0.546 | 0.3899 |
| 0 | 0.740 | 0.794 | 0.5673 |

where:

**Pvs,HFOZ** and **Pvs,HFOE** are the saturation vapour pressures of the hydrofluoroolefins HFO-1336mzzZ and HFO-1336mzzE at different temperature values,
**P,HFOZ** and **P,HFOE** are the pressure values of the hydrofluoroolefins HFO-1336mzzZ and HFO-1336mzzE in the switchgear at the filling temperature of 20 °C (P, HFOZ = Pvs, HFOZ x 293.15/Tmin(K))
**X,HFOZ** and **X,HFOE** are the molar fractions of the hydrofluoroolefins HFO-1336mzzZ and HFO-1336mzzE in the final mixture (for a final filling pressure of 1400 mbars) which could be used without producing condensation thereof even at the minimum operating temperature of the switchgear.

For example, for medium-voltage switchgear with a filling pressure at 20 °C of 1.40 bars and with a minimum operating temperature of -10 °C, the following could be used:

a) a mixture of $N_2$ (or dry air or $O_2$ or helium or a mixture thereof) with 11.86 % of HFO-1336mzzZ,
b) or a mixture of $N_2$ (or dry air or $O_2$ or helium or a mixture thereof) with 38.99 % of HFO-1336mzE,
c) or a mixture of $N_2$ (or dry air or $O_2$ or helium or a mixture thereof) with 38.99 % of HFO-1336mzzE and 11.86 % of HFO-1336mzzZ,

without producing condensation of the hydrofluoroolefins until -10 °C.
Below this temperature of -10 °C, the hydrofluoroolefins would start to partially condense, their percentage in the gaseous mixture being reduced and therefore reducing the initial dielectric strength of the insulation system.
In the same way, for a medium-voltage switchgear with a filling pressure at 20 °C of 1.40 bars and with a minimum operating temperature of -20 °C, the following could be used:

a) a mixture of 2 (or dry air or $O_2$ or helium or a mixture thereof) with 7.06 % of HFO-1336mzzZ,
b) or a mixture of $N_2$ (or dry air or $O_2$ or helium or a mixture thereof) with 23.99 % of HFO-1336mzE
c) or a mixture of $N_2$ (or dry air or $O_2$ or helium or a mixture thereof) with 23.99 % of HFO-1336mzE and 7.06 % of HFO-1336mzzZ,

without producing condensation of the hydrofluoroolefins until -20 °C.

Below this temperature of -20 °C, the hydrofluoroolefins would start to partially condense, their percentage in the gaseous mixture being reduced and therefore reducing the initial dielectric strength of the insulation system.

And so on successively for other minimum operating temperatures of the switchgear.

If the final pressures of the mixture in the switchgear were different to 1.40 bars, the percentages of HFO-1336mzzZ and HFO-1336mzzE would also be modified accordingly, and in accordance with the following formula:

$$X,HFOZ = P,HFOZ / Ptotal\ mixture$$

$$X,HFOE = P,HFOE / Ptotal\ mixture$$

Ptotal mixture being the final pressure of the mixture. If, at the time of filling the switchgear, greater percentages of hydrofluoroolefins are used in the mixtures than those indicated for each temperature, logically the dielectric strength will be greater, but it will have to be taken into consideration that at the minimum operating temperatures the dielectric strength of the insulation system would be reduced and would be lower than if the percentages of hydrofluoroolefins indicated in Tables 2 and 3 for each temperature had been used, due to the condensation of part of the hydrofluoroolefin or hydrofluoroolefins.

**Example 2: Dielectric strength test of gaseous mixtures**

The dielectric strength of different gaseous mixtures was evaluated, measuring the "dielectric breakdown voltage" in a BAUR DTA-100E device equipped with a cell for testing gases with two electrodes according to the standard ASTM D2477 (one of the 5 electrodes is a disc with a flat face of 1.50 inches in diameter and the other electrode is a spherical ball of 0.75 inches in diameter) and with a distance between electrodes of 8 mm.

The gaseous mixtures tested were the following:

a) 1.4 bares of dry air
b) 1.4 bars of dry air mixture + 4.0 % HFO-1336mzzZ
c) 1.4 bars of dry air mixture + 5.4 % HFO-1336mzzZ
d) 1.4 bars of dry air mixture + 7.0 % HFO-1336mzzZ
e) 1.4 bars of dry air mixture + 13.7 % HFO-1336mzzE
f) 1.4 bars of dry air mixture + 17.3 % HFO-1336mzzE
g) 1.4 bars of dry air mixture + 23.1 % HFO-1336mzzE
h) 1.4 bars of dry air mixture + 13.7 % HFO-1336mzzE + 15.2 % HFO-1234zeE

The results of these tests are shown in Table 4:

**Table 4: Dielectric breakdown voltage values of the gaseous mixtures**

| GAS or MIXTURE(1.4 bars) | Dielectric breakdown voltage kV |
| --- | --- |
| Dry air | 22.8 |
| Dry air + 4.0 % HFO-1336mzzZ | 24.9 |
| Dry air + 5.4 % HFO-1336mzzZ | 25.2 |
| Dry air + 7.0 % HFO-1336mzzZ | 25.8 |
| Dry air + 13.7 % HFO-1336mzzE | 37.7 |
| Dry air + 17.3 % HFO-1336mzzE | 41.2 |
| Dry air + 23.1 % HFO-1336mzzE | 44.1 |
| Dry air + 13.7 % HFO-1336mzzE + 15.2 % HFO1234zeE | 40.9 |

As can be observed in the penultimate entry in Table 4, a mixture of dry air with 23.1 % of hydrofluoroolefin HFO-1336mzzE allows the dielectric breakdown voltage of the dry air to be almost doubled at the same pressure of 1.4 bars which means that a gaseous mixture with these characteristics is ideal for electrical insulation applications in medium- or high-voltage electrical switchgear. Similarly, it can be observed how the addition of 15.2 % of HFO-1234zeE to a mixture with 13.7 % of HFO-1336mzzE + dry air also increases the dielectric strength by approximately 8.5%.

**Example 3: Environmental impact (greenhouse effect) of an example of a gaseous mixture**

The global warming potential (GWP) of a gaseous mixture is calculated according to the European Regulation on fluorinated greenhouse gases, as the weighted average derived from the sum of the fractions by weight of each one of the substances multiplied by its GWP value.
In this way:

a) the global warming potential (GWP) of a mixture with 17 % of HFO-1336mzzE and 83 % dry air would be 9.66, that is to say, 0.0424 % of the global warming potential (GWP) of the SF6 gas which is 22,800 (taking into account that the GWP of HFO-1336mzzE is 18 and that the molecular weight of HFO-1336mzzE is 164 and that of dry air is 29).
b) the global warming potential (GWP) of a mixture with 6 % of HFO-1336mzzZ and 94 % of dry air would be 0.53, that is to say, 0.0023 % of the global warming potential (GWP) of the SF6 gas which is 22,800 (taking into account that the GWP of HFO-1336mzzZ is 2 and that the molecular weight of HFO-1336mzzZ is 164 and that of dry air is 29).

**Claims**

1. An electrical insulation system with low environmental impact for medium- or high-voltage electrical switchgear, comprising:

   a) a gaseous medium formed by a mixture of:

      i. one or more non-flammable hydrofluoroolefins with at least 4 carbon atoms; and
      ii. one or more carrier gases selected from $N_2$, $O_2$, dry air, helium, $CO_2$ or mixtures thereof;

   b) a drying agent wherein the drying agent is a molecular sieve with a pore size of 3 to 6 Å and a polar surface

   wherein the hydrofluoroolefins with at least 4 carbon atoms are cis-1,1,1,4,4,4-hexafluoro-2-butene (HFO-1336mzzZ), trans-1,1,1,4,4,4-hexafluoro-2-butene (HFO-1336mzzE) or a combination of both.

2. The electrical insulation system according to claim 1, wherein the gaseous medium also comprises at least one hydrofluoroolefin with 3 carbon atoms.

3. The system according to claim 2, wherein the hydrofluoroolefin with 3 carbon atoms is trans-1,3,3,3-tetrafluoropropene (HFO-1234zeE).

4. The system according to claims 2 to 3, wherein the percentages of hydrofluoroolefin with 3 carbon atoms in the mixture are outside of the flammability limits thereof.

5. The system according to any of the preceding claims, wherein the carrier gases are selected from dry air, $N_2$ and $O_2$.

6. The system according to any of claim 1, wherein the molecular sieve has a pore size of 3 to 4 Å.

7. The system according to claim 1, wherein the molar fraction of the hydrofluoroolefin(s) with at least 4 carbon atoms is at least 1 % or at least 2 % or at least 5 % or at least 10 % or at least 15 %.

8. A use of an electrical insulation system according to any of the preceding claims for electrical insulation and/or for electrical arc extinction in medium- or high-voltage electrical switchgear.

9. A method for electrical insulation and/or electrical arc extinction in medium- and high-voltage electrical switchgear comprising the introduction of the electrical insulation system according to any of claims 1 to 7 in a closed and hermetic container where the elements to be insulated of said medium- or high-voltage electrical switchgear are located.

10. Medium- or high-voltage electrical switchgear comprising a closed container inside of which there are live electrical components and an electrical insulation system according to any of claims 1 to 7.

11. The electrical switchgear according to claim 10, wherein the switchgear can be switchgear for distributing electrical energy in networks of up to 72 kV.

**Patentansprüche**

1. Ein elektrisches Isolationssystem mit geringer Umweltbelastung für Mittel- oder Hochspannungsschaltanlagen, aufweisend:

   a) ein gasförmiges Medium, gebildet aus einer Mischung aus:

   i. einem oder mehreren nicht brennbaren Hydrofluorolefinen mit mindestens 4 Kohlestoffatomen; und
   ii. einem oder mehreren Trägergasen ausgewählt aus $N_2$, $O_2$, trockener Luft, Helium, $CO_2$ oder deren Mischungen;

   b) einem Trocknungsmittel, wobei das Trocknungsmittel ein Molekularsieb mit einer Porengröße von 3 bis 6 Å und einer polaren Oberfläche ist,

   wobei die Hydrofluorolefine mit mindestens 4 Kohlenstoffatomen cis-1,1,1,4,4,4-Hexafluor-2-buten (HFO-1336mzzZ), trans-1,1,1,4,4,4-Hexafluor-2-buten (HFO-1336mzzE) oder eine Kombination der Beiden sind.

2. Das elektrische Isolationssystem nach Anspruch 1, wobei das gasförmige Medium auch mindestens ein Hydrofluorolefin mit 3 Kohlenstoffatomen umfasst.

3. Das System nach Anspruch 2, wobei das Hydrofluorolefin mit 3 Kohlenstoffatomen trans-1,3,3,3-Tetrafluorpropen (HFO-1234zeE) ist.

4. Das System nach den Ansprüchen 2 bis 3, wobei die Prozentsätze des Hydrofluorolefins mit 3 Kohlenstoffatomen in der Mischung außerhalb seiner Entflammbarkeitsgrenzen liegen.

5. Das System nach einem der vorangehenden Ansprüchen, wobei die Trägergase ausgewählt sind aus trockener Luft, $N_2$ und $O_2$.

6. Das System nach einem Anspruch 1, wobei das Molekularsieb eine Porengröße von 3 bis 4 Å hat.

7. Das System nach Anspruch 1, wobei der Molenbruch des Hydrofluorolefins / der Hydrofluorolefine mindestens 4 Kohlenstoffatomen mindestens 1% oder mindestens 2% oder mindestens 5% oder mindestens 10% oder mindestens 15% beträgt.

8. Eine Verwendung eines elektrischen Isolationssystems nach einem der vorhergehenden Ansprüche zur elektrischen Isolierung und/oder zur Löschung des Lichtbogens in Mittel- oder Hochspannungsschaltanlagen.

9. Ein Verfahren zur elektrischen Isolierung und/oder zur Löschung des Lichtbogens in Mittel- oder Hochspannungsschaltanlagen, umfassend die Einbringung des elektrischen Isolationssystems nach einem der Ansprüche 1 bis 7 in einen geschlossenen und hermetischen Behälter, in welchem sich die zu isolierenden Elemente der besagten Mittel- oder Hochspannungsschaltanlage befinden.

10. Mittel- oder Hochspannungsschaltanlage, umfassend einen geschlossenen Behälter, in welchem spannungsführende elektrische Komponenten und ein elektrisches Isolationssystem nach einem der Ansprüche 1 bis 7 sind.

11. Die Elektroschaltanlage nach Anspruch 10, wobei die Schaltanlage eine Schaltanlage zur Verteilung elektrischer Energie in Netzwerken bis zu 72 kV sein kann.

**Revendications**

1. Système d'isolation électrique à faible impact environnemental pour un appareillage de commutation électrique à moyenne ou haute tension, comprenant :

a) un milieu gazeux formé par un mélange de :

    i. une ou plusieurs hydrofluoroléfines ininflammables ayant au moins 4 atomes de carbone ; et
    ii. un ou plusieurs gaz porteurs choisis parmi $N_2$, $O_2$, l'air sec, l'hélium, $CO_2$ ou leurs mélanges ;

b) un agent de séchage dans lequel l'agent de séchage est un tamis moléculaire ayant une taille de pores de 3 à 6 Å et une surface polaire

dans lequel les hydrofluoroléfines ayant au moins 4 atomes de carbone sont cis-1,1,1,4,4,4-hexafluoro-2-butene (HFO-1336mzzZ), trans-1,1,1,4,4,4-hexafluoro-2-butene (HFO-1336mzzE) ou une combinaison des deux.

2. Système d'isolation électrique selon la revendication 1, dans lequel le milieu gazeux comprend également au moins une hydrofluoroléfine ayant 3 atomes de carbone.

3. Système selon la revendication 2, dans lequel l'hydrofluoroléfine ayant 3 atomes de carbone est trans-1,3,3,3-tetrafluoropropène (HFO-1234zeE).

4. Système selon les revendications 2 et 3, dans lequel les pourcentages d'hydrofluoroléfine ayant 3 atomes de carbone dans le mélange sont en dehors des limites d'inflammabilité de celui-ci.

5. Système selon l'une quelconque des revendications précédentes, dans lequel les gaz porteurs sont choisis parmi l'air sec, $N_2$ et $O_2$.

6. Système selon la revendication 1, dans lequel le tamis moléculaire a une taille de pores de 3 à 4 Å.

7. Système selon la revendication 1, dans lequel la fraction molaire de la ou des hydrofluoroléfines ayant au moins 4 atomes de carbone est d'au moins 1 % ou d'au moins 2 % ou d'au moins 5 % ou d'au moins 10 % ou d'au moins 15 %.

8. Utilisation d'un système d'isolation électrique selon l'une quelconque des revendications précédentes pour l'isolation électrique et/ou pour l'extinction des arcs électriques dans un appareillage de commutation électrique à moyenne ou haute tension.

9. Procédé pour l'isolation électrique et/ou l'extinction des arcs électriques dans un appareillage de commutation électrique à moyenne et haute tension comprenant l'introduction du système d'isolation électrique selon l'une quelconque des revendications 1 à 7 dans un conteneur fermé et hermétique où sont situés les éléments à isoler dudit appareillage de commutation électrique à moyenne ou haute tension.

10. Appareillage de commutation électrique à moyenne ou haute tension comprenant un conteneur fermé à l'intérieur duquel se trouvent des composants électriques sous tension et un système d'isolation électrique selon l'une quelconque des revendications 1 à 7.

11. Appareillage de commutation électrique selon la revendication 10, dans lequel l'appareillage de commutation peut être un appareillage de commutation de distribution d'énergie électrique dans des réseaux allant jusqu'à 72 kV.

**Zeolite A**

**Sodalite cage**

1.23 nm

⊗ Si
● Al
○ O

🜨 Location of the cation

cage α (supercage)

# FIG. 1

EP 3 933 858 B1

# FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20101460022 A
- WO 2010142346 A
- WO 2012160158 A
- WO 2012160155 A
- WO 2016116637 A

- WO 2013041695 A
- WO 2013004796 A
- WO 2017162578 A
- US 20180247779 A
- WO 2016113292 A